# EUROPÄISCHE PATENTSCHRIFT

(11) **EP 2 525 967 B1**
(45) Veröffentlichungstag und Bekanntmachung des Hinweises auf die Patenterteilung: **16.04.2014**
(21) Anmeldenummer: 11701453.0
(22) Anmeldetag: 18.01.2011
(51) Int. Cl.: B31B 1/62, B41F 5/24, C09J 5/06

(54) **VERFAHREN UND VORRICHTUNG ZUR HERSTELLUNG VON VORKONFEKTIONIERTEN VERPACKUNGEN MIT FLÜSSIGEN SCHMELZKLEBSTOFFEN**
METHOD AND DEVICE FOR PRODUCING PREFABRICATED PACKAGING WITH LIQUID HOT MELT ADHESIVES
PROCÉDÉ ET DISPOSITIF POUR FABRIQUER DES EMBALLAGES PRÉCONFECTIONNÉS AVEC DES COLLES FUSIBLES LIQUIDES

(30) Priorität: 21.01.2010 DE 102010000156
(43) Veröffentlichungstag der Anmeldung: 28.11.2012
(73) Patentinhaber: EUKALIN Spezial-Klebstoff Fabrik GmbH, 52249 Eschweiler (DE)
(72) Erfinder: RICHTER, Ulrich, 76694 Forst (DE)
(74) Vertreter: Mey, Klaus-Peter
(86) Internationale Anmeldenummer: PCT/EP2011/000191
(87) Internationale Veröffentlichungsnummer: WO 2011/088986

(56) Entgegenhaltungen:
- EP-A2- 1 679 353
- WO-A1-99/05029
- DE-A1-102006 059 462
- US-A- 4 786 532
- US-A1- 2004 163 725
- US-A1- 2004 163 754
- US-A1- 2004 163 768

## Beschreibung

Die Erfindung betrifft ein Verfahren und eine Vorrichtung zur Herstellung von vorkonfektionierten Verpackungen, wie beispielsweise Faltschachteln, wobei ein flüssiger Klebstoff auf die vorgesehenen Klebestellen des Substrats aufgetragen wird, dessen Klebewirkung nach dem Abtrocknen mit geeigneten Reaktivierungsquellen, wie beispielsweise Hochfrequenz, Ultraschall, Heißluft, Infrarot oder Laser, wieder reaktiviert werden kann. US 2004 0163 768 offenbart ein Verfahren gemäß den Oberbegriff des Anspruchs 1.

Für den Bereich der Lebensmittelverpackungen existiert eine Vielzahl von gesetzlichen Regelungen, wobei durch die Globalisierung der Märkte die lebensmittelrechtlichen Anforderungen für Verpackungsmaterialien, die mit Lebensmitteln in Kontakt gelangen können, immer unüberschaubarer werden. Als Grundlage der Europäischen Regelungen für Materialien und Gegenstände, die dazu bestimmt sind, mit Lebensmitteln in Berührung zu kommen, gilt beispielsweise die Verordnung (EG) 1935/2004. Unter anderem ist darin geregelt, dass diese Materialien oder Gegenstände ausreichend inert sein müssen, um auszuschließen, dass hieraus Stoffe in solchen Mengen in die Lebensmittel übergehen können, die ausreichen, um die menschliche Gesundheit zu gefährden oder die eine unvertretbare Veränderung der Zusammensetzung von Lebensmitteln oder eine Beeinträchtigung ihrer organoleptischen Eigenschaften herbeizuführen. Bei der Verpackung von Waren in Kartons, Faltschachteln, Säcken, Tüten, Beuteln und dergleichen - insbesondere zum Zweck des Transports, der Lagerung und der Zulieferung - werden heute zum Verschließen der Behältnisse in der Regel Schmelzklebstoffe eingesetzt, da sie aufgrund der schnellen Abbindemechanismen hohe Takt-Zahlen zulassen.

In der US 2004/0163754 A1 werden entsprechende Versuche mit einem Schmelzklebstoff beschrieben, wobei dieser im aufgeschmolzen Zustand mit unterschiedlichen Verfahren, wie beispielsweise Siebdruck, Aufspritzen, Aufrollen, auf das Substrat aufgebracht wird. Nach der Abkühlung kann dieser Klebstoff dann mit Zufuhr von thermischer Energie oder Ultraschall wieder in den klebenden Zustand zurück reaktiviert werden.

Ein Nachteil der heute üblicherweise eingesetzten konventionellen EVA und Klebstoffe wie z. B. Polyolefin- oder PE-Schmelzklebstoffe besteht darin, dass die Wärmestandfestigkeit dieser Systeme relativ gering ist und den hohen Anforderungen häufig nicht standhält. Die Verklebung erweicht und verliert ihre feste Klebkraft bereits im Temperaturbereich von etwa 60 bis 70 °C mit der Folge von aufgesprungenen und offenen Verpackungen. Dieser Temperaturbereich wird aber bei Lagerung und Warentransport in solchen Verpackungen, beispielsweise in den heißen Sommerwochen, nicht nur erreicht, sondern kann auch deutlich überschritten werden. Weiterhin können Schmelzklebstoffrezepturen bis zu 70 % migrierfähige Inhaltsstoffe beinhalten. Auch der Einsatz solcher Verpackungen ist nicht für Mikrowellen geeignet.

Um den Nachteil der mangelhaften Wärmestandfestigkeit der genannten Schmelzklebstoffsysteme zu umgehen, werden heute unter anderem Schmelzklebstoffe auf Polyamidbasis eingesetzt. Zwar ist ihre Wärmestandfestigkeit mit Temperaturen bis in den Bereich von 110 bis 130 °C höher, ihre Verarbeitung ist aber deutlich aufwendiger, da höhere Verarbeitungsviskositäten vorliegen und Auftragstemperaturen bis 230 °C notwendig sind.

Eine mögliche Alternative zu den vorgenannten Klebstoffen ist der Einsatz so genannter flüssiger Schmelzklebstoffe ("flüssige Hotmelts"). Diese Produkte werden wie normale Dispersionsklebstoffe bei Raumtemperatur appliziert und anschließend getrocknet. Die Weiterverarbeitung des aufgetragenen Klebstoffs erfolgt wie bei einem Standard-Hotmelt, d. h. auch hier wird der Klebstoff durch Wärmezufuhr reaktiviert.

Eine mögliche Zusammensetzung sowie ein Verfahren zur Herstellung eines derartigen flüssigen Schmelzklebstoffs wird in der US 2004/0175589 A1 beschrieben. Danach besteht dieser Klebstoff aus einer wässrigen Emulsion eines Ethylen-Vinylacetat-Polymers, die für die Verwendung bei Heißsiegelzwecken geeignet ist, wobei das Ethylen-Vinylacetat-Polymer kristalline Ethylensegmente aufweist, die durch Emulsionspolymerisation von Ethylen und Vinylacetat in Gegenwart eines stabilisierenden Systems erzeugt wurden, das im Wesentlichen aus einem oberflächenaktiven Mittel oder einem Celluloseschutzcolloid in Kombination mit einem oberflächenaktiven Mittel besteht, wobei das Ethylen-Vinylacetat-Polymer folgendes aufweist:
(a) einen Kristallschmelzpunkt im Bereich von 35 bis 110 °C, und zwar bei einer Erwärmungsrate von 20 °C/Minute gemessen, und
(b) einen Zugspeichermodul von mindestens 1 x 10⁵ dyne/cm² bei einer Temperatur von 115 °C und gemessen bei 6,28 rad/s.

Ausführliche Anwendungsversuche, die mit diesem in der US 2004/0175589 A1 beschriebenen flüssigen Schmelzklebstoff durchgeführt wurden, sind in der EP 1 679 353 A2 offenbart.

Bei diesem Stand der Technik besteht die Aufgabe der Erfindung darin, mit einem entsprechenden Verfahren und einer darauf beruhenden Vorrichtung das Auftragen eines derartigen flüssigen Schmelzklebstoffs wesentlich zu vereinfachen und an die Taktung der maschinellen Herstellung von vorkonfektionierten Verpackungen anzupassen.

Die gestellte Aufgabe wird verfahrensgemäß mit den kennzeichnenden Merkmalen des Anspruchs 1 dadurch gelöst.

In Lackwerken mit modernen Offsetdruckmaschinen werden in der Regel Flexodrucklackwerke mit oder ohne Kammerrakelsysteme zur Veredelung des Druckbildes eingesetzt. Durch das erfindungsgemäße Inline-Aufbringen des flüssigen Schmelzklebstoffs bereits im Lackwerk entfällt in abpackenden Unternehmen und hier vorzugsweise denen, die Lebensmittel abpacken, mit Vorteil der sonst übliche Umgang mit Klebstoffen in Form von flüssiger Dispersion oder von festem Schmelzklebstoff während des Abfüll- und Verpackungsprozesses. Das System kann auch bei der Schachtelaufrichtung als Teil der Verpackungslinie eingesetzt werden, wobei der mit Klebstoff beschichtete Zuschnitt im Schachtelaufrichter aufgerichtet und die Seitenlaschen durch entsprechende Reaktivierungseinheiten verklebt werden. Anschließend kann die so hergestellte Schachtel von oben oder von der Seite befüllt, danach verschlossen und palettiert werden. Es wird lediglich in der Abpackstraße eine entsprechende Reaktivierung des bereits auf der Verpackung vorhandenen Klebstoffes vorgenommen.

Damit der Klebstoffauftrag in einem Flexodruckwerk durchgeführt werden kann, müssen gewisse maschinelle Parameter eingehalten und der flüssige Schmelzklebstoff in seinen Verarbeitungseigenschaften an das Flexodruckwerk angepasst werden.

Um ein günstiges Übertragungsverhalten des flüssigen Schmelzklebstoffs auf den Bedruckstoff zu erreichen und kein Spritzen bzw. Verlaufen auf dem Bedruckstoff stattfindet, ist die Viskosität des flüssigen Schmelzklebstoffs im Bereich von 50 - 10 000 mPas Brookfield RVT/23°C, vorzugsweise zwischen 250 - 1300 mPas Brookfield RVT/23°C eingestellt.

Weiterhin sind Zusätze eines Feuchthaltemittels, wie beispielsweise Glycerin zum flüssigen Schmelzklebstoff erforderlich, um ein Zusetzen der Raster- bzw. Druckklischee- Struktur und ein Eintrocknen im Flexodruckwerk zu verhindern, so dass nach Stillständen sofort wieder mit der Produktion begonnen werden kann.

Die Einstellung der Viskosität des flüssigen Schmelzklebstoffs und die Zumischung von Zusätzen muss dabei so durchgeführt werden, dass keine Schaumbildung im Klebstoffbecken bzw. im Kammerrakelwerk des Flexodruckwerks erfolgen kann, da sonst ein ungleichmäßiger Auftrag des flüssigen Schmelzklebstoffs auf dem Substrat erfolgt. Als Entschäumer werden Produkte auf Basis von Silikon- oder Mineralöl verwendet.

Mögliche Zusammensetzungen der erfindungsgemäß verwendeten Klebstoffkombination, wobei unterschiedliche Rezepturen auch unterschiedliche Eigenschaften bezüglich der Film- und Adhäsionseigenschaften ergeben, weisen folgende Grenzwerte auf:

| | |
|---|---|
| 0 - 100 % | semicrystalline Ethylen Vinyl Acetat Dispersion (entsprechend der US 2004/0175589 A1) |
| 0 - 40 % | Vinyl-Acetat-Ethylen Dispersion, Polyvinylacetat-Dispersion, Styrol-Acrylat-Dispersion, Acrylat-Dispersion, terpolymere wässrige Dispersion, maleinathaltige wässrige Dispersion, Polyvinylalkohollösungen unterschiedlicher Hydrolysierungsgrade und Viskositäten, carboxilierte Harzlösungen, Polyester |
| 0 - 1 % | Entschäumer (auf Basis Silikonöil oder Mineralöl) |
| 0 - 2 % | Netzmittel (nicht ionische Netzmittel, anionische Netzmittel sowie kationische und amphotere Netzmittel) |
| 0 - 10 % | Feuchthaltemittel (wie z.B.: Glycerin, Harnstoff, Polyethylenoxid, Magnesiumchlorid, Polydextrose) |

| | |
|---|---|
| Viskositätsbereich | 1 - 10 000 mPas Brookfield RVT/23°C |
| Festkörpergehalt | bis 70 % |
| Reaktivierungstemperatur | > 60 °C |

Eine beispielhafte Rezeptur besitzt folgende Zusammensetzung:

| | |
|---|---|
| 94 % | Polymer |
| 0,2 % | Entschäumer |
| 3 % | Glycerin |
| 3 % | Wasser |

Erfindungsgemäß erfolgt dieser Auftrag auf dem Substrat mit einer auf Trockengewicht bezogenen Auftragsmenge an flüssigem Schmelzklebstoff von zwischen 2 g/m² und 90 g/m², vorzugsweise von 15 g/m² und 35 g/m².

Zu der erfindungsgemäß verwendeten Klebstoffkombination aus Dispersion und Schmelzklebstoff in einem Produkt sind im Vergleich zu üblichen Schmelzklebstoffen zusammenfassend folgende Vorteile zu nennen:
- mögliche Verarbeitung wie eine normale Dispersion und Auftrag bei Raumtemperatur z. B. während des Druckvorganges, wobei die Klebstoffkombination auch mit normalen Klebstoffapplikationssystemen, die in einigen Anlagen auch separat eingebaut werden können, beispielsweise als Punkt-, Strich-, Flächenauftrag im Kontakt- oder kontaktlosen Verfahren appliziert werden kann,
- Auftrag mittels Druck auf allen gängigen Materialien wie. z. B.: Vollpappe und Wellpappe, wobei auch auf nicht ausgesparten Flächen eine Bedruckung bzw. ein Klebstoffauftrag erfolgen kann,
- Verklebungseigenschaften wie ein Schmelzklebstoff mit schnellem Abbinden nach Abkühlung, aber mit Endeigenschaften wie eine Dispersion,
- höhere Wärmestandfestigkeit im Vergleich zu EVA und polyolefinbasierten Schmelzklebstoffen,
- Verklebung beständig und dauerhaft und somit für den Einsatz in Mikrowellen, beispielsweise bei Verpackungen für Fertiggerichte geeignet,
- geringeres Migrationspotential im Vergleich zu Schmelzklebstoffen,
- neben dem Einsatz in der klassischen Verpackungsindustrie mit Faltschachteln und Verpackungskartons aus Vollpappe und Wellpappe sind auch Anwendungen im Bereich ein- und mehrlagige Tüten-, Beutel- und Sackherstellung aus Papier/Kraftpapier, der Papierbeschichtung sowie allgemeinen Heißsiegelanwendungen möglich,
- die aufgetragene Klebstoffkombination lässt sich einfach und leicht mit warmem Wasser entfernen, so dass eine einfache Reinigung möglich ist.

Die für die Verwendung dieser Klebstoffkombination erforderlichen maschinellen Veränderungen eines üblichen Flexodruckwerks, so dass mit diesem erfindungsgemäß die Klebstoffkombination direkt auf den Bedruckstoff aufgetragen werden kann, sind eine an den Feststoffgehalt und die Viskosität des Klebstoffs angepasste Geometrie und Gravur der Rasterwalze und eine angepasste Rasterstruktur (Bitmap) des Druckklischees.

Eine entsprechend geänderte Rasterwalze ist mit einem konstanten Walzendurchmesser von ca. 207 mm und mit einem hohen Walzenrundlauf ausgebildet, wobei über ihre gesamte Ballenbreite von 786 mm Abweichungen des Walzendurchmessers von max. 0,002 mm und Abweichungen des Walzenrundlaufs von max. 0,005 mm tolerierbar sind.

Die obigen Maßangaben für die Rasterwalze beziehen sich auf das zu Grunde liegende Flexodruckwerk "Speedmaster CD74" eines bestimmten Herstellers. Bei der Verwendung anderer Druckmaschinen sind möglicherweise entsprechende andere Dimensionen der Rasterwalze erforderlich.

Abgesehen von einem gravurfreien Rand von jeweils 18 mm ist die Rasterwalze mit einer Liniengravur ausgebildet, die von einer Gegengravur gekreuzt wird. Die Liniengravur ist durch folgende Parameter gekennzeichnet:
- Lineatur 18 Linien pro cm
- Winkel des Linienrasters 45°
- Gravurtiefe 130 µm
- Grafurfreier Walzenrand 18 mm
- Steg 1:20

Um einen möglichst hohen Mengenübertrag durch das hohe Schöpfvolumen der Liniengravur der Rasterwalze zu erhalten, ist das Druckklischee mit einer Rasterstruktur ausgebildet. Als besonders günstig auf ihr Entleerungsverhalten und die mögliche Übertragungsmenge sind hier Vertiefungen in Form von eng gesetzten Näpfchen in Pyramidenform (als 4-seitige Pyramiden mit nach unten ausgerichteter Spitze) in einer definierten Näpfchengeometrie des Druckklischees angeordnet.

Da auch das Verhältnis Näpfchen/Vollton einen wichtigen Einfluss auf das gewünschte Übertragungsverhalten hat, ist das Druckklischee mit folgenden Referenzwerten der Näpfchengeometrie und der Rasterstruktur ausgebildet:
- die rechteckige Grundfläche des Näpfchens liegt im 45°-Winkel zur Rotationsrichtung im Druck,
- der tiefste Punkt der Näpfchen beträgt zur Druckklischeeoberfläche ca. 535 µm,
- die Kantenlänge der rechteckigen Grundfläche des Näpfchens beträgt ca. 1,0 mm,
- die Kantenlänge der seitlichen Pyramidenfläche des Näpfchens beträgt ca. 1,5 mm,
- der Abstand der Näpfchen zueinander von Diagonale zu Diagonale beträgt ca. 3,53 mm,
- der Abstand der Näpfchen zueinander von Kantenlänge zu Kantenlänge beträgt ca. 2 mm.

Weitere Einzelheiten zur Rasterwalze und zum Druckklischee, werden nachfolgend an Hand von schematischen Zeichnungsfiguren an einem Ausführungsbeispiel näher erläutert.

Es zeigen:
- Fig. 1: eine Rasterwalze in perspektivischer Ansicht,
- Fig. 2, 3: Gravur der Rasterwalze in unterschiedlicher Vergrößerung,
- Fig. 4: die Oberfläche eines Druckklischees in perspektivischer Ansicht,
- Fig. 5, 6: das Bitmap des Druckklischees in unterschiedlicher Vergrößerung,
- Fig. 7: Grundfläche des Näpfchens,
- Fig. 8: Querschnitt des Näpfchens.

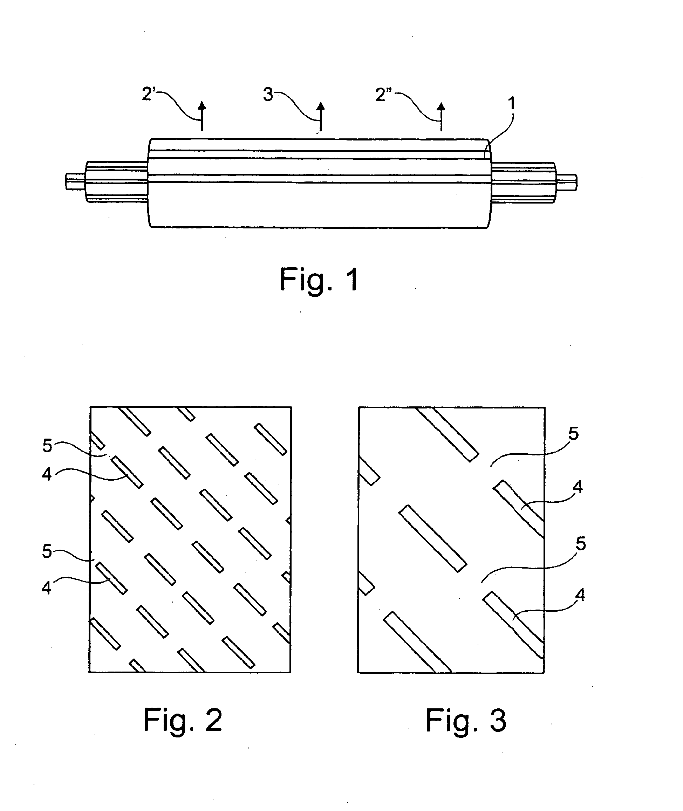

In der Figur 1 ist in einer perspektivischen Ansicht die Rasterwalze 1 eines für den Druck des flüssigen Schmelzklebstoffs verwendeten Flexodruckwerks dargestellt. Der Walzendurchmesser 2 bzw 2', 2", 3 dieser Rasterwalze 1 wurde für die durch senkrechte Pfeile gekennzeichneten Bereiche mit hoher Genauigkeit gemessen. Hierbei wurden folgende Messwerte erhalten:

| | |
|---|---|
| Walzendurchmesser 2' (linker Walzenrand) | = 206,928 mm |
| Walzendurchmesser 3 (Walzenmitte) | = 206,927 mm |
| Walzendurchmesser 2" (rechter Walzenrand) | = 206,926 mm |

Wie den aufgeführten Zahlenwerten zu entnehmen ist, verringert sich der Walzendurchmesser 2', 2", 3 von links nach rechts insgesamt um 0,002 mm, d. h. die Rasterwalze 1 ist mit diesem im µ-Bereich liegenden geringen Betrag leicht konisch ausgebildet. Der parallel hierzu mit hoher Genauigkeit gemessene Walzenrundlauf dieser Rasterwalze 1 ergab über die gesamte Ballenbreite eine konstante Abweichung von nur 0,005 mm.

In den Figuren 2 und 3 ist mit zwei unterschiedlichen Vergrößerungen die Gravur 4 der Rasterwalze 1 abgebildet. Die Gravur 4 ist hier eine Liniengravur, die durch eine Gegengravur 5 gekreuzt wird, kenntlich gemacht durch dunkle Unterbrechungen im diagonal verlaufenden Linienraster.

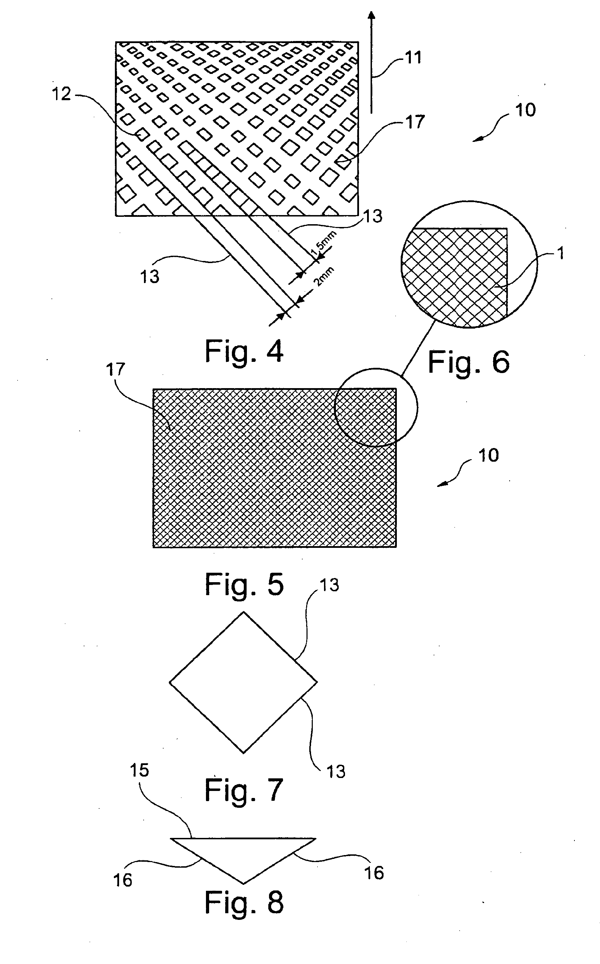

Die Figur 4 zeigt ein Foto eines Bereichs der Oberfläche 10 des Druckklischees mit einer Rasterstruktur 17, die bezüglich zur Rotationsrichtung 11 einen Winkel von 45° aufweist. Die Rasterstruktur 17 ist durch Vertiefungen in Form von Näpfchen 12 gebildet, die als 4-seitige Pyramiden mit nach unten ausgerichteter Spitze in das Druckklischee eingebracht wurden. Die Länge der Grundflächenkante 13 dieser pyramidenförmigen Näpfchen 12 beträgt ca. 1,5 mm und ihr Abstand voneinander beträgt von Kante 13 zu Kante 13 ca. 2,0 mm, wie in der Figur 4 eingezeichnet ist.

Diese Rasterstruktur 17 der Fig. 4 ergibt dann das in den Figuren 5 und in einem vergrößerten Teilausschnitt in der Figur 6 dargestellte Bitmap - Druckformat.

In den Figuren 7 und 8 ist ein einzelnes Näpfchen 12 in einer Draufsicht (Fig. 7) und im Querschnitt (Fig. 8) dargestellt. Folgende durchschnittlichen Längenmaße wurden für die den Zeichnungsfiguren entsprechenden Näpfchen 12 gemessen:

| | | |
|---|---|---|
| Figur 7 | Länge der Grundflächenkante 13 | = 1,543 mm |
| Figur 8 | Länge der seitlichen Kante 16 | = 1,0 mm ± 30 µm |
| | Diagonale 15 des Näpfchens 12 | = 1,92 mm ± 155 µm |
| | Tiefe des Näpfchens 12 | = 535,5 µm |

### Bezugszeichenliste

- 1: Rasterwalze
- 2: Walzendurchmesser (2' linker Walzenrand; 2" rechter Walzenrand)
- 3: Walzendurchmesser (Walzenmitte)
- 4: Gravur
- 5: Gegengravur
- 10: Oberfläche des Druckklischees
- 11: Rotationsrichtung im Druck
- 12: Näpfchen
- 13: Grundflächenkante des Näpfchens
- 14: Tiefe des Näpfchens
- 15: Diagonale des Näpfchens
- 16: seitliche Kante des Näpfchens
- 17: Rasterstruktur (Bitmap) des Druckklischees

## Patentansprüche

1. Verfahren zur Verwendung eines Flexodruckwerks bei der maschinellen Herstellung von vorkonfektionierten Verpackungen wie beispielsweise Faltschachteln, wobei ein flüssiger Schmelzklebstoff in Form einer wässrigen Emulsion eines Ethylen-Vinylacetat-Polymers, dessen Klebewirkung nach dem Abtrocknen mit geeigneten Reaktivierungsquellen, wie beispielsweise Hochfrequenz, Ultraschall, Heißluft, Infrarot oder Laser wieder wie ein fester Schmelzklebstoff reaktiviert werden kann, nach dem Flexodruckverfahren auf die vorgesehenen Klebestellen des Substrats aufgetragen wird, **dadurch gekennzeichnet, dass** die Auftragung des flüssigen Schmelzklebstoffs direkt auf den Bedruckstoff mit den folgenden miteinander verknüpften Parametern Inline bereits im Lackwerk in einem Flexodruckwerk durchgeführt wird, wonach:
• der flüssige Schmelzklebstoff aus einer wässrigen Emulsion eines EthylenVinylacetat-Polymers mit einer Viskosität vorzugsweise im Bereich zwischen 250 - 1300 mPas Brookfield RVT/23°C und einem Festkörpergehalt mit darin enthaltenen kristallinen Ethylensegmenten zwischen 35 und 55 % besteht,
• die Auftragsmenge auf das Substrat zwischen 15 g/m² und 35 g/m², bezogen auf das Trockengewicht beträgt,
• das verwendete Flexodruckwerk an den Feststoffgehalt und an die Viskosität des verwendeten flüssigen Schmelzklebstoffs angepasst ist durch eine mit einer Liniengravur (4) mit Gegengravur (5) ausgebildeten Rasterwalze (1) und durch ein Druckklischee (10) mit einer Rasterstruktur (Bitmap) mit Vertiefungen in Form von eng gesetzten Näpfchen (12) definierter Ausbildung und Anordnung.

2. Verfahren nach Anspruch 1, **gekennzeichnet durch** folgende Grenzwerte der möglichen Zusammensetzungen und Eigenschaften:
• 0 - 100 % semicrystalline Ethylen Vinyl Acetat Dispersion (entsprechend der US 2004/0175589 A1)
• 0 - 40 % Vinyl-Acetat-Ethylen Dispersion, Polyvinylacetat-Dispersion,
• StyrolAcrylat-Dispersion, Acrylat-Dispersion, terpolymere wässrige Dispersion, maleinathaltige wässrige Dispersion, Polyvinylalkohollösungen unterschledlicher Hydrolysierungsgrade und Viskositäten, carboxylierte Harzlösungen, Polyester
• 0 - 1 % Entschäumer (auf Basis Silikonöl oder Mineralöl)
• 0 - 2 % Netzmittel (nicht ionische Netzmittel, anionische Netzmittel sowie kationische und amphotere Netzmittel)
• 0 - 10 % Feuchthaltemittel (wie z.B.: Glycerin, Harnstoff, Polyethylenoxid, Magnesiumchlorid, Polydextrose)
• Viskositätsbereich: 1 bis 10 000 mPas Brookfield RVT/23°C
• Festkörpergehalt: bis 70 %
• Reaktivierungstemperatur: > 60°C

3. Verfahren nach Anspruch 1 oder 2, **gekennzeichnet durch** folgende beispielhafte Zusammensetzung:
• 94 % Polymer
• 0,2 % Entschäumer
• 3 % Glycerin
• 3 % Wasser.

4. Verfahren nach Anspruch 1, **dadurch gekennzeichnet, dass** die Rasterwalze (1) mit einem konstanten Walzendurchmesser (2, 3) von ca 207 mm und mit einem hohen Walzenrundlauf ausgebildet ist und die Liniengravur (4) folgende Parameter aufweist:
• Lineatur 18 Linien pro cm
• Winkel des Linienrasters 45°
• Gravurtiefe 130 µm
• Gravurfreier Walzenrand 18 mm
• Stegverhältnis 1:20

5. Verfahren nach Anspruch 4, **dadurch gekennzeichnet, dass** die Näpfchen (12) des Druckklischees (10) als 4-seitige Pyramiden mit nach unten ausgerichteter Spitze mit folgenden Referenzwerten der Näpfchengeometrie und der Rasterstruktur (17) ausgebildet sind:
• die rechteckige Grundfläche des Näpfchens (12) liegt vorzugsweise im 45° Winkel zur Rotationsrichtung im Druck,
• der tiefste Punkt des Näpfchens (12) beträgt zur Druckklischeeoberfläche ca. 535 µm,
• die Länge der Grundflächenkante (13) des Näpfchens (12) beträgt ca. 1,5 mm,
• die Länge der seitlichen Kante (16) des Näpfchens (12) beträgt ca. 1,0 mm,
• der Abstand der Näpfchen (12) zueinander von Diagonale (15) zu Diagonale (15) beträgt ca. 3,53 mm,
• der Abstand der Näpfchen (12) zueinander von Kante zu Kante beträgt ca. 2 mm,
• die Diagonale (15) der Näpfchen (12) beträgt ca. 3,5 mm.

## Claims

1. Method for use of a flexographic printing unit in the machine production of prefabricated packaging such as, for example, folding boxes, wherein a liquid hot-melt adhesive in the form of an aqueous emulsion of an ethylene vinylacetate polymer, the adhesive action of which can after drying be reactivated again as a solid hot-melt adhesive by suitable reactivating sources such as, for example, high-frequency, ultrasound, hot air, infrared or laser, is coated on the intended adhesion locations of the substrate in accordance with the flexographic printing method, **characterised in that** the coating of the liquid hot-melt adhesive is carried out in-line in the coating unit in a flexographic printing unit directly on the printed material with the following interlinked parameters, according to which:
- the liquid hot-melt adhesive consists of an aqueous emulsion of an ethylene vinylacetate polymer with a viscosity preferably in the range between 250 - 1300 mPas Brookfield RVT / 23° C and a solids content with incorporated crystalline ethylene segments between 35 and 55%,
- the coating amount on the substrate is between 15 g/m² and 35 g/m² referred to dry weight and
- the flexographic printing unit used is matched to the solids content and to the viscosity of the employed liquid hot-melt adhesive by an anilox roller (1) and by a printing plate (10) with a half-tone structure (bitmap) with depressions in the form of closely placed cells (12) of defined construction and arrangement.

2. Method according to claim 1, **characterised by** the following limit values of possible compositions and properties:
- 0 - 100% semicrystalline ethylene vinylacetate dispersion (corresponding with US 2004/0175589 A1)
- 0 - 40% vinylacetate ethylene dispersion, polyvinylacetate dispersion, styrolacrylate dispersion, acrylate dispersion, terpolymer aqueous dispersion, aqueous dispersion with maleinate content, polyvinylalcohol solutions of different degrees of hydrolysis and different viscosities, carboxylated resin solutions, polyester,
- 0 - 1 % anti-foaming agent (based on silicon oil or mineral oil)
- 0 - 2% wetting agent (non-ionic wetting agent, anionic wetting agent as well as cationic and amphoteric wetting agent)
- 0 - 10% moisture retaining agent (such as, for example: glycerine, urea, polyethylene oxide, magnesium chloride, polydextrose)
- viscosity range: 1 to 10,000 mPas Brookfield RVT / 23° C
- solids content: up to 70%
- reactivation temperature: > 60° C.

3. Method according to claim 1 or 2, **characterised by** the following exemplifying composition:
- 94% polymer
- 0.2% anti-foaming agent
- 3% glycerine
- 3% water

4. Method according to claim 1, **characterised in that** the anilox roller (1) is constructed with a constant roller diameter (2, 3) of approximately 207 mm and with highly accurate concentricity and the line engraving (4) has the following parameters:
- line count 18 lines per cm
- angle of line grid 45°
- depth of engraving 130 µm
- engraving-free roller edge 18 mm
- bridge ratio 1:20

5. Method according to claim 1, **characterised in that** the cells (12) of the printing plate (14) are constructed as four-sided pyramids with downwardly directed tips with the following reference values of the cell geometry and the half-tone structure (17):
- the rectangular base area of the cell (12) preferably lies at a 45° angle to the direction of rotation in printing,
- the deepest point of the cell (12) with respect to the printing plate surface is approximately 535 µm,
- the length of the base area edge (13) of the cell (12) is approximately 1.5 mm,
- the length of the lateral edge (16) of the cell (12) is approximately 1.0 mm,
- the spacing of the cells (12) from one another from diagonal (15) to diagonal (15) is approximately 3.53 mm,
- the spacing of the cells (12) from one another from edge to edge is approximately 2 mm and
- the diagonal (15) of the cells (12) is approximately 3.5 mm.

## Revendications

1. Procédé d'utilisation d'un élément d'impression flexographique lors de la fabrication mécanique d'emballages préfabriqués tels que par exemple des petites boites pliantes, selon lequel on applique par le procédé d'impression flexographique, sur des points de colle prédéfinis d'un substrat, une colle à fusion fluide sous la forme d'une émulsion aqueuse d'un polymère éthylène/vinyl acétate dont l'adhésivité peut être réactivée après séchage comme une colle à fusion solide au moyen de sources de réactivation adaptées telles que par exemple haute fréquence, ultrasons, air chaud, infrarouges ou laser telle qu'une colle à fusion solide,
**caractérisé en ce que**
l'application de la colle à fusion fluide est directement mise en oeuvre dans un élément d'impression flexographique sur le matériau d'impression avec les paramètres suivants combinés les uns aux autres déjà en ligne dans le mécanisme d'ancrage,
- la colle à fusion fluide est constituée par une émulsion aqueuse d'un polymère éthylène/acétate de vinyle ayant une viscosité de préférence située dans la plage comprise entre 250-1300 mPas Brookfield RVT/23°C et une teneur en corps solides renfermant des segments d'éthylène cristallins comprise entre 35 et 55 %,
- la quantité appliquée sur le substrat est comprise entre 15 g/m² et. 35 g/m² rapportée au poids sec,
- l'élément d'impression flexographique utilisé est adapté à la teneur en matières solides et à la viscosité de la colle à fusion fluide utilisée, par l'intermédiaire d'un rouleau tramé (1) réalisé avec une gravure sur lignes (4) et une contre gravure (5), et d'un cliché d'impression (10) avec une structure tramée (Bitmap) comportant des creux en forme d'alvéoles serrées (12) dont la configuration et le positionnement sont définis.

2. Procédé conforme à la revendication 1,
**caractérisé par**
les valeurs limites des compositions et propriétés possibles suivantes :
- 0-100 % d'une dispersion éthylène/acétate de vinyle semi-cristalline (selon le document US 2004/0175589 A1),
- 0-40 % d'une dispersion acétate de vinyle/éthylène, d'une dispersion de polyvinyl acétate,
- dispersion styrène/acrylate, dispersion d'acrylate, dispersion aqueuse de terpolymères, dispersion aqueuse renfermant du maleinate, solution de polyvinyl alcool ayant différents degrés d'hydrolyse et différentes viscosité, solutions de résine carboxylée, polyester,
- 0-1 % d'agent antimousse (à base d'huile de silicone ou d'huile minérale),
- 0-2% d'agent de réticulation (agent de réticulation non ionique, agent de réticulation anionique ou agent de réticulation cationique et amphotère),
- 0-10% d'agent d'humidification (tel que par exemple glycérine, urée, oxyde de polyéthylène, chlorure de magnésium, polydextrose),
- plage de viscosité 1 à 10.000 mPas Brookfield RVT/23°C,
- teneur en corps solides jusqu'à 70 %,
- température de réactivation > 60°C.

3. Procédé conforme à la revendication 1 ou 2,
**caractérisé par**
l'exemple de configuration suivant :
- 94 % polymère
- 0,2 % agent antimousse
- 3 % glycérine
- 3 % eau.

4. Procédé conforme à la revendication 1,
**caractérisé en ce que**
le rouleau tramé (1) a un diamètre de rouleau (2, 3) constant et égal à environ 207 mm et une circularité de rouleau élevée, et la gravure sur lignes (4) présente les paramètres suivants :
- linéarité 18 lignes par cm
- angle de la trame de lignes 45°
- profondeur de gravure 130 µm
- bord de rouleau exempt de gravure 18 mm
- proportion de nervures 1:20

5. Procédé conforme à la revendication 4,
**caractérisé en ce que**
les alvéoles (12) du cliché d'impression (10) sont réalisées sous la forme de pyramides à quatre côtés ayant leur pointe orientée vers le bas avec les valeurs de référence de la géométrie des alvéoles et de la structure de trame (17) suivante :
- la surface de base rectangulaire des alvéoles (12) fait de préférence un angle de 45° par rapport au sens de rotation lors de l'impression,
- le point le plus profond des alvéoles (12) est à environ 535 mm de la surface du cliché d'impression,
- la longueur des côtés de la surface de base (13) des alvéoles (12) est d'environ 1,5 mm,
- la longueur des côtés latéraux (16) des alvéoles (12) est d'environ 1,0 mm,
- la distance des alvéoles (12) les unes aux autres d'une diagonale (15) à une autre diagonale (15) est d'environ 3,53 mm,
- la distance des alvéoles (12) les unes par rapport aux autres d'arête d'un côté à un autre est d'environ 2 mm,
- la diagonale (15) des alvéoles (12) est égale à environ 3,5 mm.
